# FASCICULE DE BREVET EUROPEEN

(11) **EP 0 600 107 B1**
(45) Date de publication et mention de la délivrance du brevet: **23.10.1996**
(21) Numéro de dépôt: 92120369.1
(22) Date de dépôt: 28.11.1992
(51) Int. Cl.: A23G 9/28

(54) **Procédé et dispositif de fabrication de gâteaux glacés avec des couches croquantes**
Verfahren und Vorrichtung zur Herstellung von gefrorenem Kuchen mit Krokantschichten
Process and device for manufacturing frozen cake with crunchy layers

(43) Date de publication de la demande: 08.06.1994
(73) Titulaire: FRISCO-FINDUS AG, CH-9400 Rorschach (CH)
(72) Inventeur: Daouse, Alain, F-60430 Noailles (FR)
(74) Mandataire: Archambault, Jean

(56) Documents cités:
- EP-A- 0 044 689
- EP-A- 0 221 757
- EP-A- 0 277 408
- EP-A- 0 328 170
- EP-A- 0 434 857
- EP-A- 0 485 654
- EP-A- 0 503 254
- WO-A-88/02990
- DE-A- 3 716 362
- US-A- 4 184 613
- US-A- 4 910 030

## Description

L'invention a trait au domaine de la fabrication des gâteaux, notamment des gâteaux glacés contenant des couches décoratives intégrées de matière croquante.

EP-A-44689 concerne un procédé et un appareil de fabrication de gâteaux glacés utilisant un joint tournant permettant l'extrusion en continu de boudins torsadés multicolores de crème glacée. Un tel dispositif ne permettrait pas l'extrusion simultanée de crème glacée, à température négative et de composition devenant dure au contact de la crème glacée mais devant être distribuée sous forme liquide, donc à température supérieure à la température ambiante, car l'ajutage serait rapidement obturé.

EP-A-328170 se rapporte à un dispositif décorateur pour gâteaux glacés mettant également en oeuvre un joint tournant mû par un automate programmable. Dans une forme d'exécution, le dispositif permet de réaliser un décor avec festons sur des gâteaux ronds en jouant sur les débits relatifs de crème glacée et la vitesse de rotation du joint tournant du distributeur. Ici également, il n'est pas prévu d'extruder simultanément plusieurs matières dont les comportements à la fusion sont très différents.

EP-A-434857 concerne un système de distribution simultanée de crème glacée et de chocolat qui comprend la mise en mouvement de deux lames de crème glacée et de chocolat liquide, la crème glacée prenant en charge le chocolat à l'extérieur des ajutages d'extrusion. Ce système est adapté au fonctionnement au coup par coup pour remplir des coupes, cornets ou pots marquant un temps d'arrêt pendant le remplissage mais ne peut pas être utilisé, par exemple pour des décors réalisés en continu, puisque les formes engendrées par les mouvements ne peuvent être maitrisées que grâce aux récipients qui reçoivent les produits. De plus, le mécanisme de mise en mouvement des buses de distribution des produits est relativement encombrant.

EP-A-485654 est relatif à un dispositif distributeur de couches alternées de chocolat et de crème glacée dans des cornets ou des pots fonctionnant également au coup par coup de construction plus compacte que le précédent. Ce distributeur comporte un joint tournant délivrant verticalement la crème glacée sous forme d'un ruban hélicoïdal entouré d'une buse annulaire fixe d'où s'écoule le chocolat qui vient s'insérer sous forme de lames dans le ruban hélicoïdal. Ce dispositif peut travailler à haute cadence tout en produisant une répartition régulière des couches de chocolat au sein de la crème glacée. Lorsque l'on veut réaliser une extrusion en continu d'un décor au moyen de ce dispositif, il faut l'incliner de manière à dégager le produit des ajutages. Malheureusement, la crème glacée vient alors obstruer les ajutages d'écoulement du chocolat.

Nous avons trouvé un moyen de réaliser en continu un décor à base de composition croquante intégrée à la crème glacée en utilisant un distributeur à joints tournants compact apportant une solution au problème de la prise en masse de la composition croquante au contact de la crème glacée.

L'invention concerne donc un procédé de fabrication d'un gâteau glacé comportant un décor intégré de matière croquante dans lequel on extrude simultanément et en continu une composition glacée à température négative et une composition liquide à une température supérieure à la température ambiante et l'on dépose le décor intégré sur un support en défilement, caractérisé par le fait que l'on extrude la composition glacée et la composition liquide à partir de buses rotatives coaxiales à ajutage en forme de queue de carpe dont l'axe de rotation est incliné par rapport au support,
que les ajutages sont sensiblement parallèles ou sensiblement alignés, sont disposés radialement par rapport à l'axe de rotation des buses et tournent à la même vitesse et
que les canaux de distribution de la composition glacée et de la composition liquide sont isolés thermiquement l'un par rapport à l'autre.

Selon une première forme d'exécution du procédé de l'invention, le décor composite de matière croquante et de composition glacée peut être extrudé directement par exemple sur un papier ou un carton supporté par une bande transporteuse en défilement continu. Il constitue alors lui-même le gâteau.

En fonction des vitesses relatives de rotation des buses, de défilement du support et des débits de composition glacée et de composition liquide, on peut obtenir différents décors gaufrés plus ou moins sérés. Si l'on alterne par exemple des couches de crème glacée et de chocolat, en distribuant alternativement l'une puis l'autre matière à chaque tour des buses, on peut réaliser un décor en forme de coquille St-Jacques.

Selon une seconde forme d'exécution du procédé on peut extruder le décor composite de matière croquante et de composition glacée en le déposant par exemple sur un boudin de composition glacée déposé au préalable sur un papier ou un carton supporté par une bande transporteuse en défilement continu.

L'invention concerne également un dispositif de fabrication d'un article de confiserie glacée comportant un décor intégré de matière croquante, caractérisé par le fait qu'il comprend
deux buses rotatives coaxiales pour une composition glacée et pour une composition liquide munies de joints tournants,
des moyens de mise en rotation commune des buses, des moyens d'isolation thermique du canal de distribution de la composition glacée par rapport au canal de distribution de la composition liquide et des ajutages en forme de queue de carpe sensiblement parallèles ou sensiblement alignés et disposés radialement par rapport à l'axe de rotation des buses.

Le dispositif selon l'invention peut être placé avec l'axe de rotation des buses en position verticale et être utilisé pour remplir des récipients, par exemple des cornets ou pots en défilement au coup par coup.

On préfère cependant le mettre en oeuvre pour fabriquer des gâteaux glacés en déposant le décor intégré sous forme d'un boudin continu sur une bande transporteuse en défilement et dans ce cas l'axe de rotation des buses est incliné par rapport à la bande transporteuse dans la direction d'avancement de cette bande.

L'invention sera mieux comprise à l'aide de la description faite en regard des dessins ci-après donnés à titre d'exemple dans lesquels:
La figure 1 est une représentation schématique en coupe longitudinale d'un mode de réalisation du dispositif selon l'invention,
La figure 2 est une coupe longitudinale détaillée des buses d'extrusion d'un mode de réalisation préféré du dispositif selon l'invention et
La figure 3 est une représentation schématique du dispositif mettant en oeuvre une forme d'exécution préférée du procédé de l'invention.

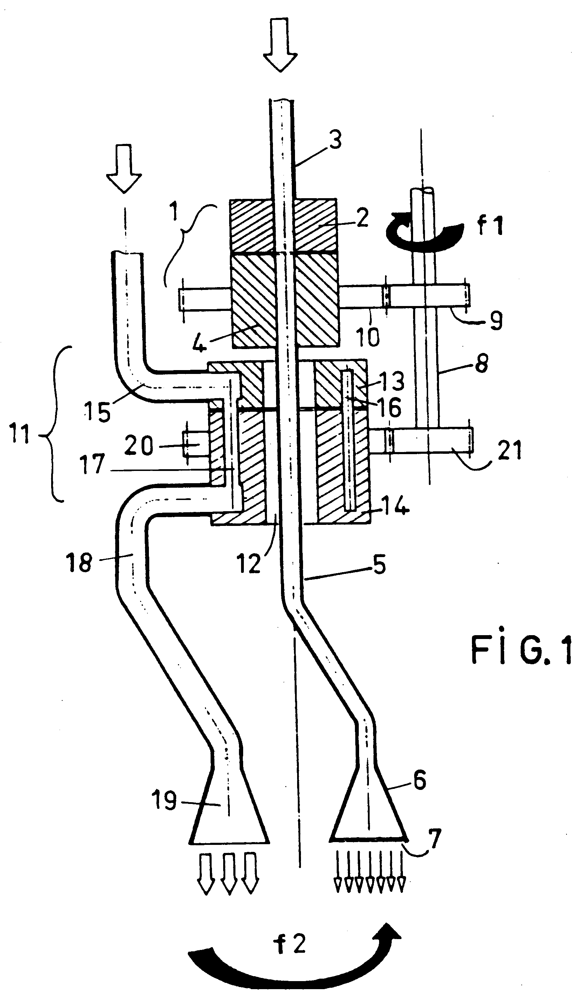

A la figure 1, le dispositif comprend une première buse rotative 1 constituée d'une partie fixe qui est un corps 2 de révolution traversé suivant son axe longitudinal par un conduit 3. La partie fixe est associée à une partie mobile constituée d'un corps de révolution 4 auquel est fixé un canal 5 rectiligne dans sa partie supérieure et coudé en S dans sa partie inférieure se terminant par un ajutage 6 en forme de queue de carpe muni d'orifices 7. L'ajutage est désaxé par rapport à l'axe de rotation de la buse 1 et parallèle à celui-ci.

L'ensemble constitue un joint tournant. La buse 1 est mise en rotation par l'intermédiaire d'un arbre 8 auquel est fixé un engrenage 9 en prise sur un engrenage 10 solidaire du corps 4. L'arbre 8 est mû par un moteur non représenté et tourne selon la flèche f1. La composition liquide, par exemple du chocolat traverse le conduit 3, le canal 5 et est distribuée par les orifices 7 de l'ajutage 6.

Une seconde buse rotative 11 est disposée coaxialement autour de la partie supérieure rectiligne du canal 5 et en dessous de la buse 1. Elle comporte en son centre un évidement cylindrique 12 la traversant de part en part et ouvert à l'air libre. La buse 11 comporte une partie fixe constituée d'un corps 13 de révolution et une partie mobile constituée d'une couronne 14. Un conduit 15 coudé est fixé radialement au corps 13 et débouche sur une gorge annulaire 16 ouverte vers le bas du corps 13. La couronne 14 comporte une gorge annulaire 17 ouverte vers le haut en regard de la gorge 16 du corps 13. La gorge 17 débouche à son tour dans un canal 18 fixé radialement à la couronne 14. Le canal 18 d'abord radial est ensuite coudé à l'équerre, puis en forme de S et se termine par un ajutage 19 en queue de carpe aligné par rapport à l'ajutage 6 et symétrique de celui-ci par rapport à l'axe de rotation des buses.

L'ensemble constitue un joint tournant. La couronne 14 et donc également l'ajutage 19 sont entrainés en rotation par l'intermédiaire d'un engrenage 20 fixé à la couronne 14 et en prise sur un engrenage 21 solidaire de l'arbre 8, les diamètres des engrenages 20 et 21 étant respectivement les mêmes que ceux des engrenages 9 et 10, de sorte que les buses tournent à la même vitesse selon la flèche f2. La composition glacée arrive par le conduit 15, se répartit dans les gorges 16 et 17, puis traverse le canal 18 et est délivrée en continu par l'ajutage 19. Dans cette forme d'exécution, on voit que les circuits de distribution respectifs de composition liquide et de composition glacée sont isolés l'un de l'autre par une couronne d'air.

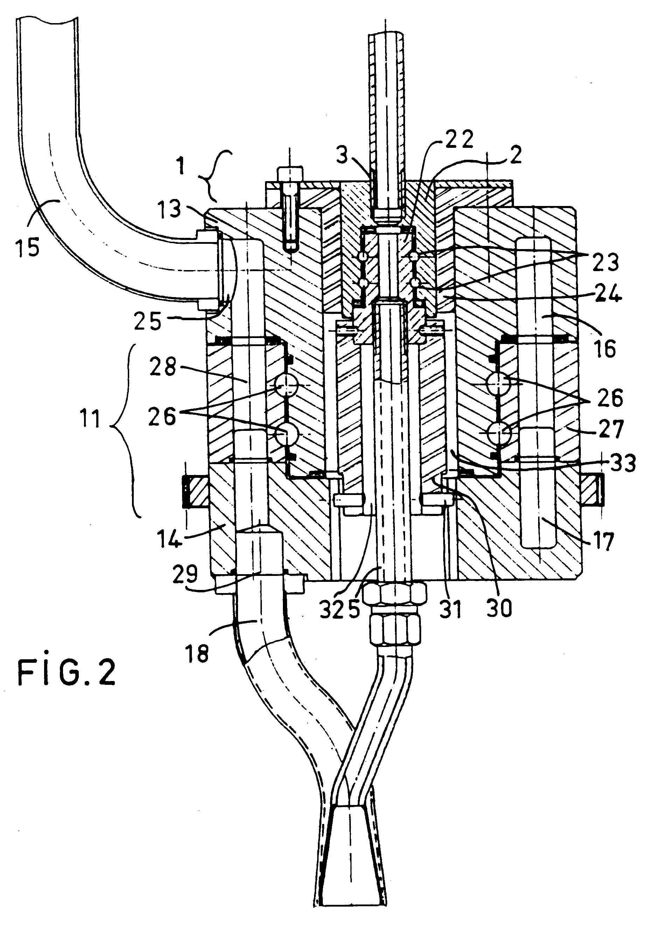

Dans le mode de réalisation préféré représenté à la figure 2, la buse d'extrusion de composition liquide est imbriquée dans celle d'extrusion de composition glacée de manière à constituer un emsemble compact. Dans cette figure, les mêmes chiffres de référence désignent les mêmes pièces qu'à la figure 1.

La buse 1 comprend un moyeu 22 central en métal à la partie supérieure duquel est fixé le conduit 3 et à la partie inférieure duquel est fixé le canal 5. Le moyeu 22 tourne librement dans le corps 2 annulaire fixe grâce aux roulements à billes 23 maintenus en place par le corps 2. La pièce annulaire 24, en matériau plastique isolant thermiquement est fixée au corps 2 et entoure le corps 2.

La buse 11 comprend le corps 13 fixe métallique annulaire dans lequel sont fixés le corps 2 et la pièce 24. Le corps 13 est pourvu dans son épaisseur supérieure de la gorge 16 annulaire ouverte vers le bas et percée d'une ouverture 25 latérale en regard du conduit 15. La partie inférieure du corps 13 est entourée de la couronne 14 métallique. La couronne 14 comprend une partie inférieure et une partie supérieure. Elle tourne librement sur le corps 13 grâce aux roulements à billes 26 qui sont maintenus en place par la partie supérieure de la couronne 14, soit la pièce annulaire 27. La pièce annulaire 27 et la partie inférieure de la couronne 14 sont percées par un canal 28. La couronne 14 est évidée et comporte une gorge 17 annulaire ouverte vers le haut dans sa partie inférieure, laquelle gorge est reliée au canal 18 par l'ouverture 29 . La couronne 14 est entrainée en rotation par l'intermédiaire du raccord 30 cylindrique en matériau plastique isolant thermiquement et dont la partie supérieure est fixée au moyeu 22 cependant que sa partie inférieure est rendue solidaire de la couronne 14 par l'intermédiaire de clavettes 31. On voit que de cette manière le canal 5 est entouré d'une couronne d'air 32 de même que le raccord 30 est entouré d'une couronne d'air 33. Le circuit de composition liquide est ainsi entièrement isolé thermiquement de celui de composition glacée sans que ne puissent se créer de ponts thermiques. Par ailleurs, les buses 1 et 11 ont leurs parties fixes 2, 13 et leurs parties mobiles 4, 14 reliées entre elles, si bien qu'il suffit d'entrainer en rotation le moyeu 22 pour que les deux buses tournent à la même vitesse.

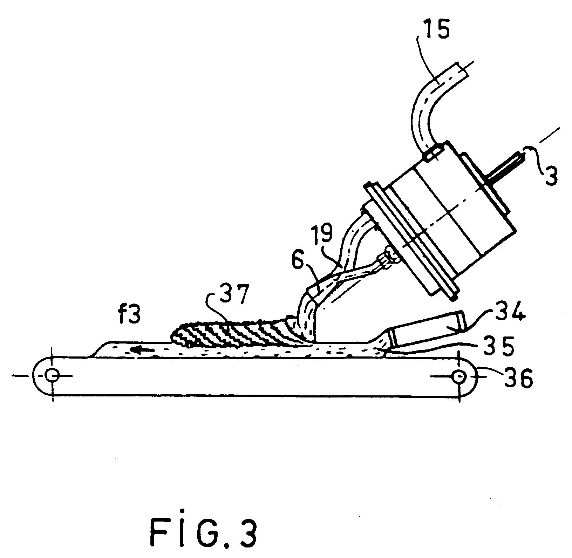

A la figure 3, un ajutage 34 fixe dépose un boudin 35 de composition glacée sur une bande transporteuse 36 en défilement selon la flèche f3 sur laquelle on a préalablement déposé une feuille de papier ou de carton non représentée. Le boudin 35 sert de support à un décor 37 composite comprenant du chocolat intégré à de la crème glacée. Ce décor est produit par la rotation des buses 1 et 11 qui son inclinées par rapport à la bande transporteuse dans la direction de défilement de celle-ci. Dans cette mise en oeuvre du procédé, les ajutages 6 et 19 sont proches l'un de l'autre et les queues de carpe sensiblement parallèles. On obtient un décor plissé en volutes en jouant sur le débit des compositions, la vitesse de rotation des buses et la vitesse de défilement de la bande, la régularité du décor étant obtenue par le fait qu'une résistance s'établit entre les couches du décor 37 et le support de crème glacée 35. Le boudin décoré continu peut ensuite être tronçonné pour former un gâteau.

On peut par l'intermédiaire d'une soupape non représentée en ce qui concerne la composition glacée et d'un clapet non représenté pour ce qui est de la composition liquide, interrompre l'alimentation en compositions simultanément lorsque l'on remplit un récipient, par exemple avec le dispositif selon la figure 1. On peut réaliser l'interrupption de l'alimentation alternativement un tour sur deux lorsque l'on décore un gâteau en continu et obtenir de cette manière un gâteau glacé avec décor en forme de coquille St-Jacques, par exemple avec le dispositif selon la figure 2, utilisé selon la figure 3.

La composition glacée est avantageusement une crème glacée à 5-10% en poids de matière grasse et 30-45% en poids de matière sèche, foisonnée à au moins 90%, extrudée à une température de -5 à -3°C. Bien entendu, les paramètres d'extrusion dépendent du type de crème glacée et plus particulièrement de son point de congélation, de la quantité de matière grasse et de la nature des stabilisants.

La composition liquide est avantageusement un couverture de chocolat relativement visqueuse de manière à pouvoir être projetée à basse pression, par exemple de l'ordre de 0,1 à 1 bar par rapport à la pression atmosphérique par les orifices de l'ajutage 6 à une température de l'ordre d'environ 40-45°C.

On a montré plus particulièrement la fabrication d'articles de crème glacée contenant des feuillets de chocolat. Ce qui précède vaut également pour la fabrication d'un article de dessert à base de mousse réfrigérée, par exemple à base de crème ou de fromage foisonnés contenant des feuillets de matière croquante.

## Revendications

1. Procédé de fabrication d'un gâteau glacé comportant un décor intégré de matière croquante dans lequel on extrude simultanément et en continu une composition glacée à température négative et une composition liquide à une température supérieure à la température ambiante et l'on dépose le décor intégré sur un support en défilement, caractérisé par le fait
que l'on extrude la composition glacée et la composition liquide à partir de buses rotatives coaxiales à ajutage en forme de queue de carpe dont l'axe de rotation est incliné par rapport au support,
que les ajutages sont parallèles ou alignés, sont disposés radialement par rapport à l'axe de rotation des buses et tournent à la même vitesse et
que les canaux de distribution de la composition glacée et de la composition liquide sont isolés thermiquement l'un par rapport à l'autre.

2. Procédé selon la revendication 1, caractérisé par le fait que la composition glacée est une crème glacée foisonnée et la compostion croquante une couverture chocolatée.

3. Procédé selon la revendication 1 ou 2, caractérisé par le fait que l'on interrompt l'alimentation en composition glacée et l'alimentation en composition liquide alternativement un tour des buses sur deux et que l'on réalise ainsi un gâteau avec un décor en forme de coquille St-Jacques.

4. Procédé selon la revendication 1, caractérisé par le fait que l'on dépose le décor intégré sur un boudin de crème glacée et que l'on tronçonne le boudin obtenu en portions.

5. Dispositif de fabrication d'un article de confiserie glacée comportant un décor intégré de matière croquante, caractérisé par le fait qu'il comprend
deux buses rotatives coaxiales pour une composition glacée et pour une composition liquide munies de joints tournants,
des moyens de mise en rotation commune des buses,
des moyens d'isolation thermique du canal de distribution de la composition glacée par rapport au canal de distribution de la composition liquide et des ajutages en forme de queue de carpe parallèles ou alignés et disposés radialement par rapport à l'axe de rotation des buses.

6. Dispositif selon la revendication 5, caractérisé par le fait qu'il comprend en outre une bande transporteuse en défilement et que l'axe de rotation des buses est incliné par rapport à la bande transporteuse dans la direction d'avancement de cette bande.

7. Dispositif selon la revendication 5, caractérisé par le fait que la buse délivrant la composition liquide est à l'intérieur de la buse d'extrusion de la composition glacée, que les buses comportent des parties fixes et des parties mobiles reliées entre elles et sont entrainées en rotation par une seule motorisation.

8. Dispositif selon la revendication 5, caractérisé par le fait que les les moyens d'isolation thermique des canaux de distribution des compositions liquide et glacée sont constitués d'au moins une couronne d'air dans la partie rotative des buses.

## Claims

1. A method of production of an iced cake comprising an integrated decoration of crisp material in which an iced composition is simultaneously and continuously extruded at a negative temperature with a liquid composition at a temperature above ambient temperature and the integrated decoration is deposited on a moving support, characterized in that the iced composition and the liquid composition are extruded from rotary tubes coaxial with fishtail nozzles whose axis of rotation is inclined with respect to the support, in that the nozzles are parallel or aligned, are disposed radially with respect to the axis of rotation of the tubes and rotate at the same speed and in that the distribution channels for the iced composition and the liquid composition are thermally isolated from one another.

2. A method as claimed in claim 1, characterized in that the iced composition is an expanded ice cream and the crisp composition is a covering chocolate.

3. A method as claimed in claim 1 or 2, characterized in that the supply of iced composition and the supply of liquid composition are alternately discontinued one out of each two turns of the tubes, thereby producing a cake with a scalloped decoration.

4. A method as claimed in claim 1, characterized in that the integrated decoration is disposed on a sausage of ice cream and the sausage obtained is cut into portions.

5. A device for producing an article of iced confectionery comprising an integrated decoration of crisp material, characterized in that it comprises two coaxial rotary tubes for an iced composition and a liquid composition provided with rotary joints, means for the common rotation of the tubes, means for the thermal isolation of the distribution channel for the iced composition from the distribution channel for the liquid composition and nozzles in the form of fishtails which are parallel or aligned and disposed radially with respect to the axis of rotation of the tubes.

6. A device as claimed in claim 5, characterized in that it also comprises a moving conveyor belt and in that the axis of rotation of the tubes is inclined with respect to the conveyor belt in the direction of forward movement of this belt.

7. A device as claimed in claim 5, characterized in that the tube supplying the liquid composition is inside the extrusion tube for the iced composition and in that the tubes comprise fixed portions and mobile portions which are connected together and are driven in rotation by a single motor drive.

8. A device as claimed in claim 5, characterized in that the means for the thermal isolation of the distribution channels of the liquid and iced compositions are formed by at least one ring of air in the rotary portion of the tubes.

## Patentansprüche

1. Verfahren zur Herstellung einer Eistorte mit einer eingearbeiteten Verzierung aus Krokantmasse, bei dem gleichzeitig und im Dauerbetrieb eine Eismischung mit Minus-Temperatur und eine flüssige Mischung, deren Temperatur höher ist als die Umgebungstemperatur, gespritzt wird und die eingearbeitete Verzierung auf einem durchlaufenden Träger abgelegt wird,
dadurch gekennzeichnet,
daß die Eismischung und die flüssige Mischung aus koaxialen, drehbaren Zumisch-Düsen in Fischschwanzform gespritzt wird, deren Drehachse gegenüber dem Träger geneigt ist, daß die Zumischvorrichtungen parallel oder abgefluchtet sind, radial zur Drehachse der Düsen angeordnet sind und sich mit der gleichen Geschwindigkeit drehen, und daß die Zuführkanäle für die Eismischung und die flüssige Mischung gegeneinander wärmeisoliert sind.

2. Verfahren nach Anspruch 1, dadurch gekennzeichnet, daß die Eismischung eine aufgegangene Eiscreme ist und die Krokantmischung ein schokoladehaltiger Überzug ist.

3. Verfahren nach Anspruch 1 oder 2, dadurch gekennzeichnet, daß die Zufuhr an Eismischung und die Zufuhr an flüssiger Mischung abwechselnd bei jeder zweiten Umdrehung der Düsen unterbrochen wird und auf diese Weise eine Torte mit einer Verzierung in Form von Jakobsmuscheln hergestellt wird.

4. Verfahren nach Anspruch 1, dadurch gekennzeichnet, daß die eingearbeitete Verzierung auf einem Eiscreme-Strang abgelegt wird und der hergestellte Strang in Portionen zerschnitten wird.

5. Vorrichtung zur Herstellung einer Tiefkühl-Süßware mit eingearbeiteter Verzierung aus Krokantmasse, die dadurch gekennzeichnet ist, daß sie zwei koaxiale, drehbare Düsen für eine Eismischung und eine flüssige Mischung, die mit Drehverbindungen versehen sind, Mittel zum gemeinsamen Drehen der Düsen, Mittel zur Wärmeisolierung des Zuführkanals für die Eismischung gegenüber dem Zuführkanal für die flüssige Mischung sowie Zumischvorrichtungen in Fischschwanzform, die im wesentlichen parallel oder im wesentlichen abgefluchtet sind und radial zur Drehachse der Düsen angeordnet sind, aufweist.

6. Vorrichtung nach Anspruch 5, dadurch gekennzeichnet, daß sie ferner ein vorbeilaufendes Transportband aufweist und daß die Drehachse der Düsen gegenüber dem Transportband in der Vorschubrichtung dieses Bandes geneigt ist.

7. Vorrichtung nach Anspruch 5, dadurch gekennzeichnet, daß die Düse, die die flüssige Mischung abgibt, sich im Inneren der Spritzdüse für die Eismischung befindet, daß die Düsen feste Teile und bewegliche Teile aufweisen, die miteinander verbunden sind, und von einem einzigen Antrieb in Drehbewegung versetzt werden.

8. Vorrichtung nach Anspruch 5, dadurch gekennzeichnet, daß die Mittel zur Wärmeisolierung zwischen den Zuführkanälen für die flüssige Mischung und die Eismischung aus mindestens einem Luftkranz in dem drehenden Teil der Düsen bestehen.
